# EUROPÄISCHE PATENTSCHRIFT

(11) **EP 2 455 555 B1**
(45) Veröffentlichungstag und Bekanntmachung des Hinweises auf die Patenterteilung: **24.06.2020**
(21) Anmeldenummer: 11008732.7
(22) Anmeldetag: 02.11.2011
(51) Int. Cl.: E02F 9/22

(54) **Arbeitsgerät**
Work device
Appareil de travail

(30) Priorität: 17.11.2010 DE 102010051663
(43) Veröffentlichungstag der Anmeldung: 23.05.2012
(73) Patentinhaber: Liebherr-Hydraulikbagger GmbH, 88457 Kirchdorf/Iller (DE)
(72) Erfinder: Lavergne, Hans-Peter, 87779 Trunkelsberg (DE); Egenrieder, Philipp, 89075 Ulm (DE); Asam, Dirk, 89081 Ulm (DE); Fehse, Jochen, 71272 Renningen (DE)
(74) Vertreter: Laufhütte, Dieter

(56) Entgegenhaltungen:
- EP-A1- 2 052 889
- WO-A1-97/16371
- WO-A1-02/095243
- WO-A1-2004/113622
- DE-A1- 2 060 091
- DE-B3-102004 034 706
- US-A1- 2005 168 010
- US-A1- 2007 068 754

## Beschreibung

Die vorliegende Erfindung betrifft ein Arbeitsgerät mit einem über mindestens einen Arbeits-Antrieb bewegbaren Element, wobei mindestens ein Energierückgewinnungszylinder zur Energierückgewinnung aus der Bewegung des bewegbaren Elementes vorgesehen ist, welcher eine mit Gas befüllte Kammer aufweist. Insbesondere umfaßt der Arbeits-Antrieb dabei einen Arbeits-Hydraulikzylinder. Bei dem Arbeitsgerät handelt es sich um einen Bagger oder eine Maschine zum Materialumschlag.

Die mit Gas befüllte Kammer des Energierückgewinnungszylinders wird bei solchen Arbeitsgeräten beim Absenken des bewegbaren Elementes komprimiert und speichert so die potentielle Energie, um diese bei einer Aufwärtsbewegung des bewegbaren Elementes zur Unterstützung des Arbeits-Antriebs wieder abzugeben.

Aus der DE 10 2008 034 582 A1 ist dabei ein Arbeitsgerät bekannt, bei welchem die mit Gas befüllte Kammer des Energierückgewinnungszylinders durch die mit Gas befüllte Bodenseite des Energierückgewinnungszylinders sowie die hohle Kolbenstange des Energierückgewinnungszylinders gebildet wird.

Die WO 97 / 16 371 offenbart ein Arbeitsgerät mit einem hydraulisch betätigbaren Ausleger, welches einen zwischen der Basis des Arbeitsgeräts und dem Ausleger angeordneten Energierückgewinnungszylinder aufweist.

Aufgabe der vorliegenden Erfindung ist es, die Funktion eines Arbeitsgerätes mit einem Energierückgewinnungszylinder mit einer mit Gas gefüllten Kammer weiter zu verbessern.

Diese Aufgabe wird erfindungsgemäß durch ein Arbeitsgerät gemäß Anspruch 1 gelöst. Die vorliegende Erfindung zeigt dabei ein Arbeitsgerät, bei welchem es sich um einen Bagger oder eine Maschine zum Materialumschlag handelt, mit einem über mindestens einen Arbeits-Antrieb bewegbaren Element, wobei mindestens ein Energierückgewinnungszylinder zur Energierückgewinnung aus der Bewegung des bewegbaren Elementes vorgesehen ist, welcher eine mit Gas befüllte Kammer aufweist, wobei erfindungsgemäß eine Vorrichtung zur Einstellung der Temperatur des Energierückgewinnungszylinders vorgesehen ist, welche die Kühlung des Energierückgewinnungszylinders ermöglicht.

Dies trägt der Erkenntnis Rechnung, daß die Temperatur des Energierückgewinnungszylinders bzw. des darin befindlichen Gases entscheidend für den Betrieb des Arbeitsgerätes ist. Erfindungsgemäß kann daher die Temperatur des Energierückgewinnungszylinders eingestellt werden. Hierdurch können ungünstige Temperatursituationen vermieden bzw. verbessert werden. Durch die Kühlung des Energierückgewinnungszylinders kann einem unkontrollierten Aufheizen des Energierückgewinnungszylinders während des Betriebes entgegengewirkt werden.

Dabei kann vorgesehen sein, daß die Vorrichtung zur Einstellung der Temperatur des Energierückgewinnungszylinders eine Erwärmung des Energierückgewinnungszylinders ermöglicht. Insbesondere kann so der Energierückgewinnungszylinder zum Beispiel bei kalten Umgebungstemperaturen auf eine gewisse Betriebstemperatur gebracht werden. Die Erwärmung des Energierückgewinnungszylinders kann dabei auf unterschiedliche Art und Weise erfolgen.

Insbesondere kann dabei ein Heizelement vorgesehen sein, durch welches der Energierückgewinnungszylinder erwärmt wird. Dabei kann das Heizelement am Energierückgewinnungszylinder, insbesondere am Zylindermantel angeordnet sein. Vorteilhafterweise ist das Heizelement dabei ein elektrisch betriebenes Heizelement.

Weiterhin kann die Erwärmung über einen Wärmetauscher erfolgen. Insbesondere handelt es sich dabei vorteilhafterweise um einen Wärmetauscher, wie dieser unten noch näher beschrieben wird. Vorteilhafterweise ist der Wärmetauscher dabei an einen Wärmekreislauf angeschlossen. Insbesondere ist dabei in dem Wärmekreislauf ein Heizelement zur Erwärmung des Fluids im Wärmekreislauf vorgesehen, insbesondere ein elektrisches Heizelement.

Die Erwärmung kann auch über ein Reibungselement erfolgen. Insbesondere erhöht das Reibungselement dabei erfindungsgemäß die Reibung bei einer Bewegung des Energierückgewinnungszylinders. Insbesondere erzeugt das Reibungselement dabei Reibungswärme zwischen dem Reibungselement und der Zylinderstange des Energierückgewinnungszylinders, wenn die Zylinderstange gegenüber dem Zylindermantel bewegt wird. Vorteilhafter Weise ist dabei das Reibungselement mit einem Aktor versehen, und kann so angesteuert werden. Insbesondere kann vorteilhafterweise über den Aktor der Anpreßdruck des Reibungselementes gesteuert werden.

Vorteilhafterweise erfolgt die Kühlung über einen Wärmetauscher. Vorteilhafterweise ist dieser Wärmetauscher dabei so ausgeführt, wie dies oben beschrieben wurde.

Vorteilhafterweise erfolgt die Einstellung der Temperatur des Energierückgewinnungszylinders in der vorliegenden Erfindung durch eine gezielte Ansteuerung der Vorrichtung zur Einstellung der Temperatur durch eine Steuerung. Besonders bevorzugt wird dabei die Vorrichtung zur Einstellung der Temperatur des Energierückgewinnungszylinders auf Grundlage mindestens eines Betriebsparameters des Arbeitsgerätes angesteuert.

In weiterhin vorteilhafter Weise ist erfindungsgemäß ein Temperatursensor vorgesehen, wobei die Ansteuerung der Vorrichtung zur Einstellung der Temperatur des Energierückgewinnungszylinders auf Grundlage eines Signals des Temperatursensors erfolgt. Insbesondere ermöglicht ein solcher Temperatursensor vorteilhafterweise eine Regelung der Temperatur des Energierückgewinnungszylinders.

In einer vorteilhaften Ausgestaltung der vorliegenden Erfindung mißt dabei der Temperatursensor die Temperatur des Energierückgewinnungszylinders und/oder die Temperatur des Gases in der mit Gas befüllten Kammer und/oder die Temperatur eines Kühlfluids. Dies ermöglicht eine Steuerung bzw. Regelung der Temperatur des Energierückgewinnungszylinders bzw. der Temperatur des Gases in der mit Gas befüllten Kammer des Energierückgewinnungszylinders. Alternativ oder zusätzlich kann der Temperatursensor auch die Außentemperatur messen. Auch dies ermöglicht eine effektive Ansteuerung der Vorrichtung zur Einstellung der Temperatur des Energierückgewinnungszylinders.

Das Arbeitsgerät kann dabei eine Steuerung aufweisen, durch welche die Vorrichtung zur Einstellung der Temperatur des Energierückgewinnungszylinders so angesteuert wird, daß der Energierückgewinnungszylinder unterhalb einer ersten Schwellentemperatur erwärmt wird. Alternativ oder zusätzlich kann vorgesehen sein, daß die Vorrichtung zur Einstellung der Temperatur des Energierückgewinnungszylinders über die Steuerung so angesteuert wird, daß der Energierückgewinnungszylinder oberhalb einer zweiten Schwellentemperatur gekühlt wird.

Weiterhin kann zusätzlich oder alternativ vorgesehen sein, daß der Energierückgewinnungszylinder innerhalb eines Temperaturfensters keine Kühlung und/oder Erwärmung erfährt. Durch das Abschalten der Vorrichtung zur Einstellung der Temperatur innerhalb eines gewissen Temperaturfensters kann der Energieverbrauch für die Einstellung der Temperatur so gering wie möglich gehalten werden.

Erfindungsgemäß kann der Energierückgewinnungszylinder einen Wärmetauscher umfassen, welcher an einen Kühlkreislauf angeschlossen ist, welcher von einem Kühlfluid durchströmt wird. Der Kühlkreislauf kann dabei je nach Ausführung zum Kühlen und/oder zum Erwärmen des Energierückgewinnungszylinders eingesetzt werden.

Vorteilhafterweise weist der Kühlkreislauf dabei eine Kühleinheit zum Kühlen des Kühlfluids auf. Alternativ oder zusätzlich kann vorgesehen sein, daß der Kühlkreislauf eine Heizeinheit zum Erwärmen des Kühlfluids aufweist. Weiterhin kann vorgesehen sein, daß der Kühlkreislauf eine Pumpe zum Umwälzen des Kühlfluids aufweist. Durch Ansteuerung der Pumpe, der Kühleinheit und/oder der Heizeinheit kann so erfindungsgemäß die Kühlung und/oder Erwärmung des Energierückgewinnungszylinders angesteuert werden.

Die Ansteuerung der Vorrichtung zur Einstellung der Temperatur des Energierückgewinnungszylinders muß dabei nicht notwendig nur zur Einstellung der Temperatur des Energierückgewinnungszylinders dienen, sondern kann auch zur Einstellung der Temperatur weiterer Komponenten des Arbeitsgerätes dienen.

Dabei ist vorteilhafterweise der Kühlkreislauf des Energierückgewinnungszylinders an den Kühlkreislauf einer weiteren Komponente des Arbeitsgerätes angeschlossen. Insbesondere handelt es sich dabei um den Kühlkreislauf eines Verbrennungsmotors und/oder einer Hydraulik des Arbeitsgerätes. Verbrennungsmotoren und/oder Hydraulik weisen dabei üblicherweise bereits einen Kühlkreislauf auf. Dieser arbeitet üblicherweise auf Grundlage einer Kühlflüssigkeit.

Durch den Anschluß des Energierückgewinnungszylinders an den Kühlkreislauf einer weiteren Komponente des Arbeitsgerätes können gleich zwei Probleme äußerst kostengünstig und einfach gelöst werden. Der Kühlkreislauf der Komponente hat üblicherweise immer eine gleichbleibende Temperatur. Hierdurch kann der Energierückgewinnungszylinder zu Beginn des Betriebs auf eine gewisse Betriebstemperatur erwärmt werden.

Der zweite Punkt ist die Kühlung des Energierückgewinnungszylinders durch den Kühlkreislauf. Hierdurch kann verhindert werden, daß die Temperatur übermäßig ansteigen kann und somit die vorhandenen Überdruckventile, welche als Berstsicherung ausgeführt sind aktiviert werden. Alternativ kann zur Kühlung des Energierückgewinnungszylinders jedoch auch eine separate Kühlanordnung gewählt werden und der Kühlkreislauf des weiteren Elements des Arbeitsgerätes nur zur Erwärmung herangezogen werden.

Insbesondere wird gewährleistet, daß im Zylinder immer der gleiche Betriebsdruck herrscht bzw. daß der Betriebsdruck im Zylinder nur innerhalb eines vorgegebenen Fensters schwankt. Hierdurch wird immer eine gleichbleibende oder ähnliche Kraft/Hub-Kurve im Energierückgewinnungszylinder gewährleistet, unabhängig von der Außentemperatur oder der Betriebsweise.

Beide Probleme können natürlich nicht nur durch Anschluß eines Wärmetauschers des Energierückgewinnungszylinders an den Kühlkreislauf einer bereits vorhandenen Komponente eines Arbeitsgerätes gelöst werden, sondern auch durch eine eigenständige Ansteuerung der Temperatur des Energierückgewinnungszylinders und/oder eine nur zeitweilige Verbindung mit einem solchen Kühlkreislauf.

Insbesondere kann eine Schaltungsanordnung vorgesehen sein, durch welche der Wärmetauschers des Energierückgewinnungszylinders mit dem Kühlkreislauf der bereits vorhandenen Komponente des Arbeitsgerätes auf Grundlage eines Betriebsparameters, insbesondere auf Grundlage eines Temperatursignals, verbunden und getrennt wird. Insbesondere kann die Schaltungsanordnung dabei mit Schwellentemperaturen arbeiten, wie dies oben näher dargstellt wurde.

Neben dem erfindungsgemäßen Arbeitsgerät umfaßt die vorliegende Erfindung weiterhin ein Verfahren zum Betrieb eines solchen Arbeitsgerätes bei dem die Temperatur des Energierückgewinnungszylinders vermindert wird. Vorteilhafterweise erfolgt die Verminderung der Temperatur des Energierückgewinnungszylinders dabei in Abhängigkeit von mindestens einem Betriebsparameter.

Vorteilhafterweise erfolgt das Verfahren dabei so, wie dies oben hinsichtlich des Arbeitsgerätes bereits beschrieben wurde.

Die Erfinder der vorliegenden Erfindung haben festgestellt, daß die Temperatur des Gases in der mit Gas befüllten Kammer des Energierückgewinnungszylinders einen großen Einfluß auf die Funktion des Energierückgewinnungszylinders und damit des Arbeitsgerätes hat. Insbesondere verändert sich die Kraft-Weg-Kennlinie des Energierückgewinnungszylinders mit der Temperatur des Gases. Durch einen Wärmetauscher können Temperaturschwankungen des Gases und/oder zu hohe und/oder zu niedrige Temperaturen des Gases in dem Energierückgewinnungszylinder verringert oder verhindert werden.

Insbesondere wurde festgestellt, daß sich das Gas in der mit Gas befüllten Kammer durch den Betrieb aufheizen kann. Hierdurch können ungewünscht hohe Temperaturen entstehen. In einer bevorzugten Ausführungsform der vorliegenden Erfindung ist daher der erfindungsgemäße Energierückgewinnungszylinder mit einem Wärmetauscher ausgestattet, durch welchen der Energierückgewinnungszylinder bzw. das Gas in der mit Gas befüllten Kammer gekühlt werden kann oder gekühlt wird.

Weiterhin kann sich auch bei zu geringen Temperaturen des Gases (z.B. bei geringen Außentemperaturen) eine ungünstige Kennlinie oder eine zu geringe Zylinderkraft des Energierückgewinnungszylinders ergeben. In einer weiteren Ausführungsform der vorliegenden Erfindung ist daher der erfindungsgemäße Energierückgewinnungszylinder mit einem Wärmetauscher ausgestattet, durch welchen der Energierückgewinnungszylinder bzw. das Gas in der mit Gas befüllten Kammer erwärmt werden kann.

Hierdurch können für den Betrieb des Arbeitsgerätes ungünstige Temperatursituationen behoben oder doch zumindest verbessert werden.

Vorteilhafterweise ist dabei vorgesehen, daß der Wärmetauscher den Zylindermantel des Energierückgewinnungszylinders umgibt. Hierdurch ergibt sich eine große Fläche zum Wärmeaustausch. Zudem muß nicht in den internen Aufbau des Energierückgewinnungszylinders eingegriffen werden.

Vorteilhafterweise kommt die vorliegende Erfindung bei einem Energierückgewinnungszylinder zum Einsatz, welcher bodenseitig mit Gas gefüllt ist. Das Gas in der mit Gas befüllten Kammer steht damit in direktem Kontakt mit dem Zylindermantel, so daß die Anordnung des Wärmetauschers am Zylindermantel von besonderem Vorteil ist.

Vorteilhafterweise umgibt dabei der Wärmetauscher mehr als 50% der Außenfläche des Zylindermantels. In weiterhin vorteilhafter Weise umgibt der Wärmetauscher mehr als 70%, und in weiterhin vorteilhafter Weise mehr als 90% der Außenfläche des Zylindermantels. Hierdurch wird eine besonders gute Wärmeübertragung gewährleistet.

Wärmetauschelemente des Wärmetauschers können dabei direkt auf den Zylindermantel des Wärmetauschers angeordnet werden. In einer alternativen Ausführungsform umfaßt der Wärmetauscher dagegen ein Zylinderrohr, welches wärmeleitend auf der Außenfläche des Zylindermantels des Energierückgewinnungszylinders angeordnet ist. Dies vereinfacht die Herstellung des Wärmetauschers, welcher als autarke Einheit auf den Energierückgewinnungszylinder aufgeschoben werden kann.

Der erfindungsgemäße Wärmetauscher kann dabei je nach Ausführung zu einer aktiven oder auch nur zu einer passiven Kühlung bzw. Erwärmung des Energierückgewinnungszylinders eingesetzt werden.

In einer ersten Ausführungsform des erfindungsgemäßen Arbeitsgerätes weist der Wärmetauscher dabei Kühlrippen auf, welche von der Außenluft umströmt werden können. Hierdurch ist eine effiziente Kühlung des Energierückgewinnungszylinders durch die Außenluft gewährleistet. Insbesondere vergrößern die Kühlrippen die Oberfläche des Energierückgewinnungszylinders.

Vorteilhafterweise erstrecken sich die Kühlrippen dabei von dem Zylindermantel des Energierückgewinnungszylinders oder einem Zylinderrohr des Wärmetauschers nach außen. Die Kühlrippen können dabei zum Beispiel in radialer Richtung, in Längsrichtung oder spiralförmig verlaufen.

In einer weiteren Ausführungsform der vorliegenden Erfindung kann der Wärmetauscher dagegen einen Strömungsraum aufweisen, welcher von einem Kühlfluid durchströmt wird. Insbesondere weist der Strömungsraum dabei einen Eingang und einen Ausgang auf, mit welchen der Wärmetauscher an einen Kühlkreislauf bzw. an einen Wärmekreislauf angeschlossen werden kann. Insbesondere weist der Strömungsraum hierfür Anschlußelemente auf, über welche Schläuche zur Führung des Kühlfluids angeschlossen werden können.

Dabei kann vorgesehen sein, daß der Wärmetauscher ein Außenrohr aufweist, welches eine Außenwand des Strömungsraumes bildet. Insbesondere kann dabei der Strömungsraum zwischen der Außenfläche des Zylindermantels des Energierückgewinnungszylinders und dem Außenrohr angeordnet sein. In einer alternativen Ausführungsform, bei welcher der Wärmetauscher ein Zylinderrohr umfaßt, welches wärmeleitend auf der Außenfläche des Zylindermantels angeordnet ist, kann der Strömungsraum auch zwischen diesem Zylinderrohr und dem Außenrohr angeordnet sein.

Weiterhin kann erfindungsgemäß vorgesehen sein, daß der Strömungsraum den Zylindermantel spiralförmig umgibt. Hierdurch kann ein besonders gleichmäßiger Fluß des Kühlfluids durch den Strömungsraum gewährleistet werden. Der spiralförmige Strömungsraum kann dabei durch eine Rohrleitung zur Verfügung gestellt werden, welche spiralförmig um den Zylindermantel bzw. das Zylinderrohr geführt ist. Alternativ kann auch zwischen dem Außenrohr und dem Zylindermantel bzw. dem Zylinderrohr eine wendelförmige Verbindungsanordnung vorgesehen sein, durch welche der Strömungsraum spiralförmig unterteilt wird. Die wendelförmige Verbindungsanordnung kann dabei auf dem Zylindermantel bzw. auf dem Zylinderrohr angeordnet sein. Insbesondere kann die Verbindungsanordnung dabei in das Material des Zylindermantels bzw. Zylinderrohrs eingearbeitet sein. Alternativ oder zusätzlich kann die wendelförmige Verbindungsanordnung auch an dem Außenrohr angeordnet sein, insbesondere in das Material des Außenrohres eingearbeitet.

Der erfindungsgemäße Wärmetauscher kann dabei der Kühlung des Energierückgewinnungszylinders bzw. des in diesem vorhandenen Gases dienen. Vorteilhafterweise ist der Wärmetauscher hierfür an einen Kühlkreislauf des Arbeitsgerätes angeschlossen.

Weiterhin kann der Wärmetauscher der Erwärmung des Energierückgewinnungszylinders dienen. Vorteilhafterweise ist der Wärmetauscher hierfür an einen Heizkreislauf des Arbeitsgerätes angeschlossen. Insbesondere erfolgt dies so, wie es oben hinsichtlich der Vorrichtung zur Einstellung der Temperatur des Energierückgewinnungszylinders näher beschrieben ist.

Insbesondere kann der Wärmetauscher dabei an einen kombinierten Kühl- und Heizkreislauf des Arbeitsgerätes angeschlossen sein.

Besonders bevorzugte Einsatzmöglichkeiten der vorliegenden Erfindung sollen nun noch einmal kurz beschrieben werden:
Bei dem erfindungsgemäßen Arbeitsgerät handelt es sich um einen Bagger oder eine Maschine zum Materialumschlag.

Dieses weist ein über mindestens einen Arbeits-Antrieb bewegbares Element auf, wobei mindestens ein Energierückgewinnungszylinder zur Energierückgewinnung aus der Bewegung des bewegbaren Elements vorgesehen ist. Als Arbeits-Antrieb kann dabei insbesondere ein Arbeits-Hydraulikzylinder zum Einsatz kommen.

Dabei dient der Energierückgewinnungszylinder mit der mit Gas befüllten Kammer selbst als Energiespeicher für die Energierückgewinnung aus der Bewegung des bewegbaren Elements. Der von der Bodenseite des Energierückgewinnungszylinders gebildete Raum ist dabei vorteilhafterweise mit unter Druck stehendem Gas befüllt, welches bei einer Bewegung der Kolbenstange gegen den Boden komprimiert wird. Die dabei gespeicherte Energie steht dann bei einer Aufwärtsbewegung der Kolbenstange zur Unterstützung des Arbeits-Antriebs, insbesondere des Arbeits-Hydraulikzylinders wieder zur Verfügung. In weiterhin vorteilhafter Weise ist die Kolbenstange des Energierückgewinnungszylinders hohl und zur Bodenseite hin offen, so daß das Innere der Kolbenstange einen Teil der mit Gas befüllten Kammer bildet.

Das bewegbare Element des erfindungsgemäßen Arbeitsgerätes ist vorteilhafterweise am Arbeitsgerät um eine vertikale Drehachse schwenkbar angelenkt und über den oder die Arbeits-Antriebe in einer vertikalen Schwenkebene verschwenkbar. Insbesondere handelt es sich bei dem bewegbaren Element dabei um den Stiel eines Baggers oder den Ausleger einer Maschine zum Materialumschlag. Weiterhin vorteilhafterweise weist das verfahrbare Arbeitsgerät dabei einen Unterwagen mit Fahrwerk und einen darauf um eine vertikale Drehachse drehbar angeordneten Oberwagen auf, an welchem das bewegliche Element angelenkt ist.

Am bewegbaren Element kann dabei ein Arbeitswerkzeug, zum Beispiel eine Schaufel oder ein Greifer, angeordnet sein. Beim Absenken des bewegbaren Elementes wird die potentielle Energie des bewegbaren Elementes und des Arbeitswerkzeugs über den Energierückgewinnungszylinder gespeichert, um bei der Aufwärtsbewegung des bewegbaren Elements das Ausrüstungsgewicht zumindest teilweise wieder zu kompensieren. Hierdurch muß über die Arbeits-Antrieb weniger Energie aufgewendet werden, um das bewegbare Element nach oben zu bewegen.

Hierdurch verbessert sich die Energiebilanz des Arbeitsgerätes, da weniger installierte Motorleistung benötigt wird und der Kraftstoffverbrauch gesenkt wird.

Der erfindungsgemäße Energierückgewinnungszylinder ist dabei vorteilhafterweise wie der oder die Arbeits-Hydraulikzylinder zwischen einem Oberwagen des Arbeitsgerätes und dem bewegbaren Element angeordnet. Der Energierückgewinnungszylinder bewegt sich damit bei einer Bewegung des bewegbaren Elementes gleichzeitig zum Arbeits-Hydraulikzylinder.

Die vorliegende Erfindung wird nun anhand von Ausführungsbeispielen sowie Zeichnungen näher beschrieben.

Dabei zeigen
- Fig. 1: ein Ausführungsbeispiel eines erfindungsgemäßen Arbeitsgerätes mit zwei Arbeits-Hydraulikzylindern und einem Energierückgewinnungszylinder,
- Fig. 2 a: eine Prinzipdarstellung einer ersten Variante des erfindungsgemäßen Energierückgewinnungszylinders,

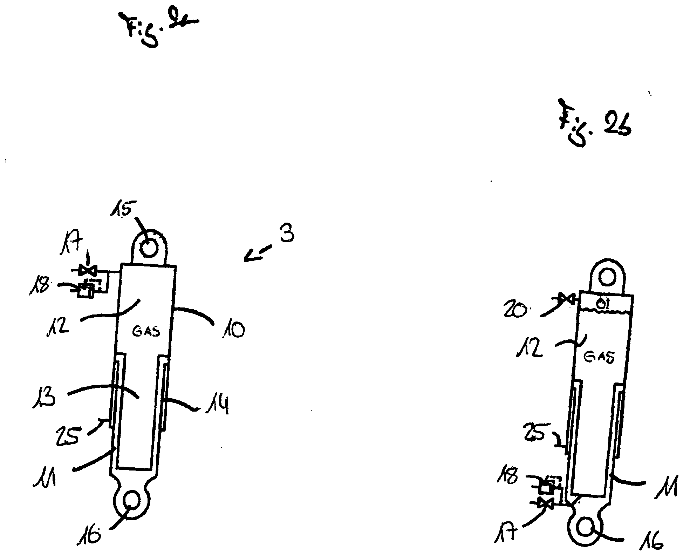

- Fig. 2: b eine Prinzipdarstellung eines zweiten Variante des erfindungsgemäßen Energierückgewinnungszylinders,

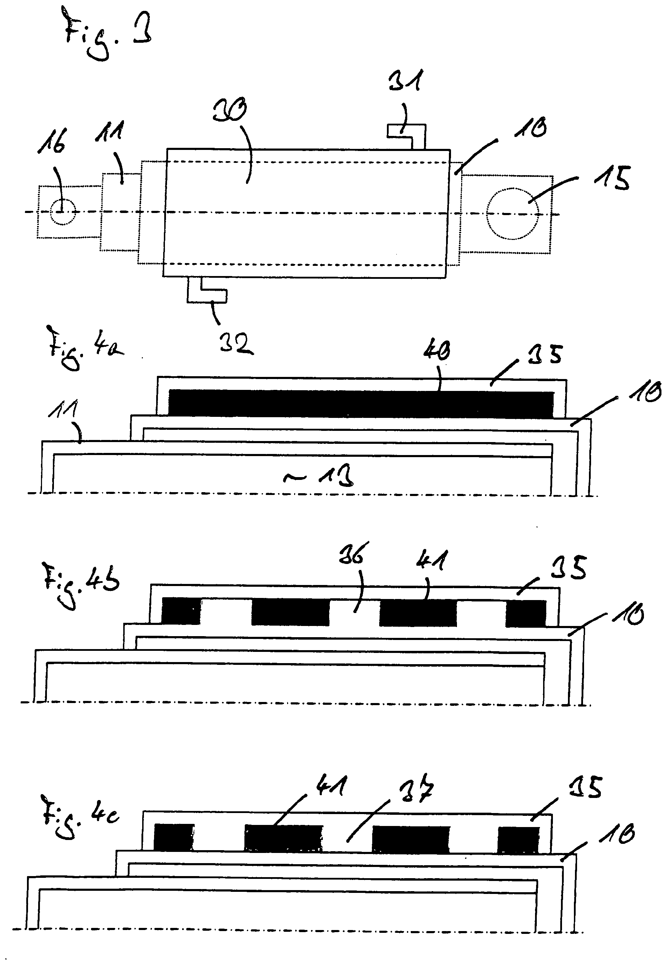

- Fig. 3: ein Ausführungsbeispiel eines erfindungsgemäßen Energierückgewinnungszylinders mit einem Wärmetauscher, welcher einen mit einem Kühlfluid durchströmbaren Strömungsraum aufweist,
- Fig. 4a bis 4d: vier Varianten eines Wärmetauschers, wie er in Fig. 3 gezeigt ist, in Schnittansichten, wobei der Wärmetauscher direkt auf dem Zylindermantel des Energierückgewinnungszylinders angeordnet ist,

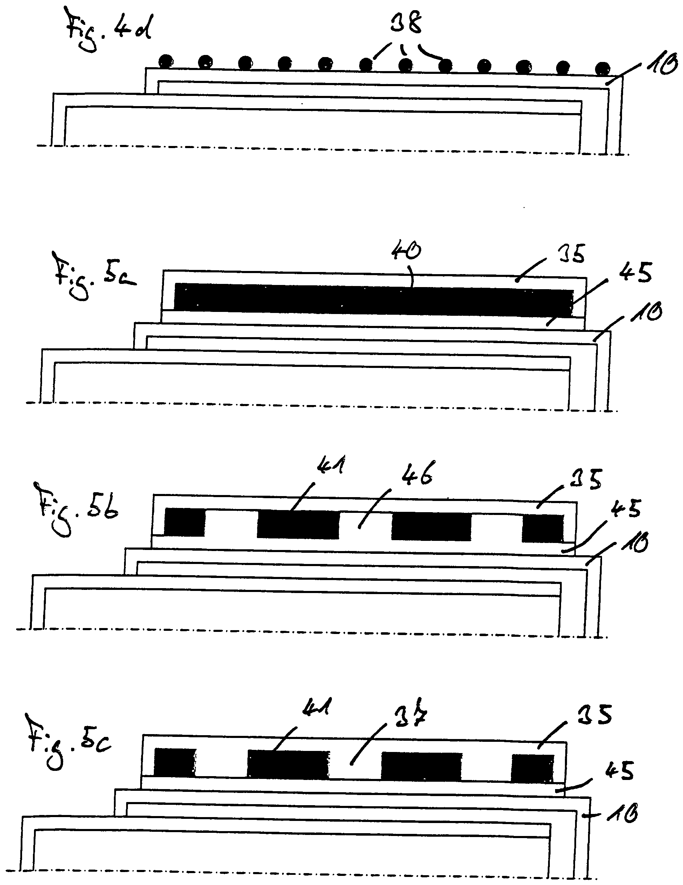

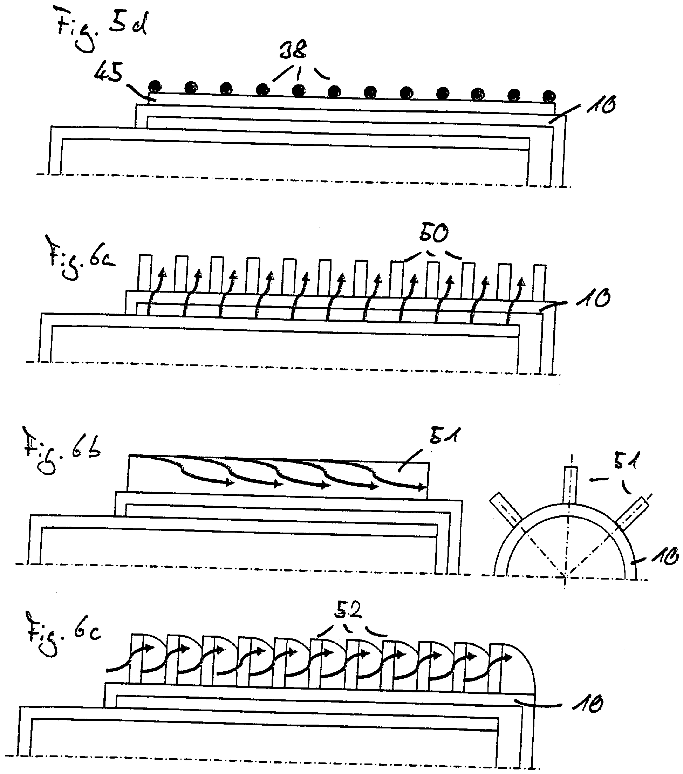

- Fig. 5a bis 5d: vier Varianten eines Energierückgewinnungszylinders mit einem Wärmetauscher, wie er in Fig. 3 gezeigt ist, in einer Schnittansicht, wobei der Wärmetauscher ein auf dem Zylindermantel des Energierückgewinnungszylinders angeordnetes Zylinderrohr umfaßt,
- Fig. 6a bis 6c: drei Varianten eines Ausführungsbeispiels eines Energierückgewinnungszylinders mit Kühlrippen,

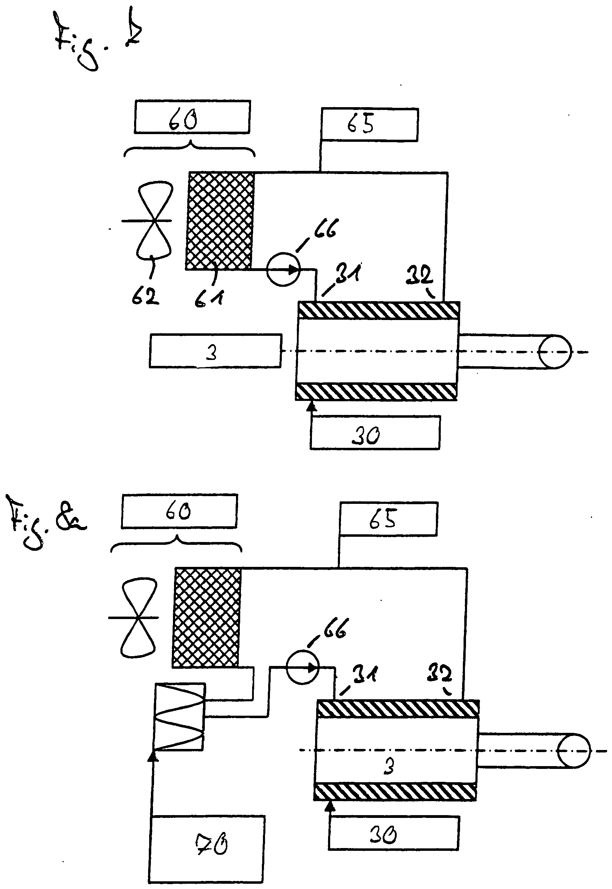

- Fig. 7: ein Ausführungsbeispiel einer erfindungsgemäßen Vorrichtung zur Einstellung der Temperatur eines Energierückgewinnungszylinders, wobei nur eine Kühlung vorgesehen ist,
- Fig. 8a bis 8c: drei Varianten eines Ausführungsbeispiels zur Einstellung der Temperatur eines Energierückgewinnungszylinders, wobei unterschiedliche Varianten einer Heizanordnung dargestellt sind,

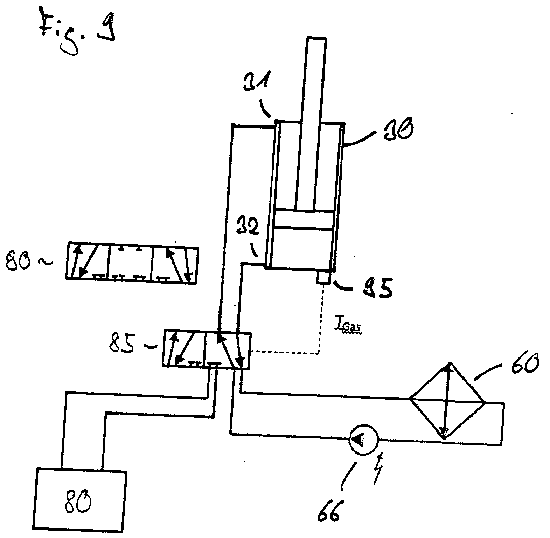

- Fig. 9: ein weiteres Ausführungsbeispiel einer erfindungsgemäßen Vorrichtung zur Einstellung der Temperatur eines Energierückgewinnungszylinders in zwei Varianten.

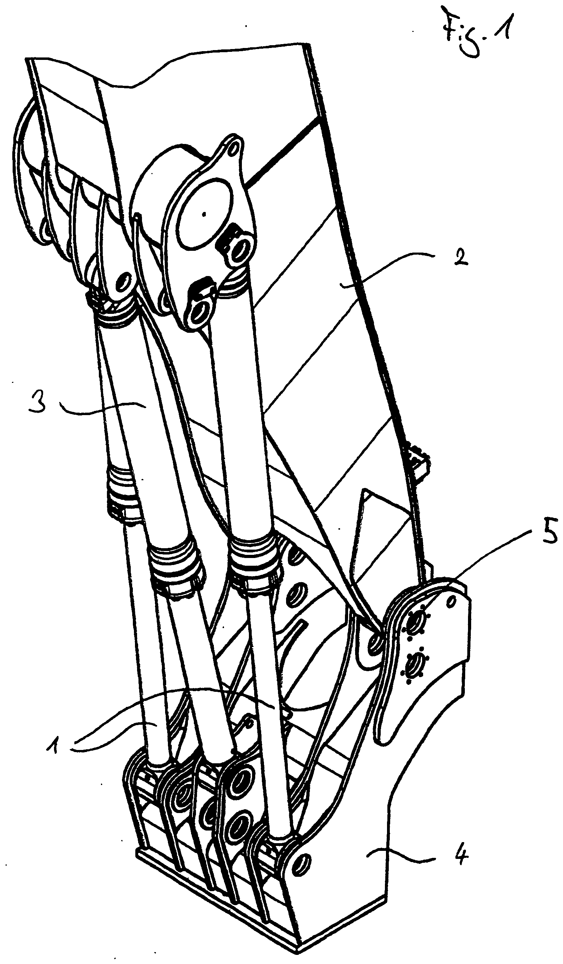

Anhand der Figuren 1 und 2 soll nun zunächst allgemein ein Ausführungsbeispiel eines Arbeitsgerätes mit einem Energierückgewinnungszylinder gezeigt werden, bei welchem die vorliegende Erfindung zum Einsatz kommen kann.

Das Arbeitgerät umfaßt dabei ein bewegbares Element 2, welches über eine horizontal verlaufende Schwenkachse 5 an einer Schweißkonstruktion 4 des Arbeitsgerätes angelenkt ist. Bei dem Arbeitsgerät handelt es sich dabei um einen Hydraulikbagger, bei dem bewegbaren Element 2 um den Baggerstiel, welcher am Oberwagen des Baggers angelenkt ist. Der Oberwagen selbst ist dabei um eine vertikale Drehachse auf einem Unterwagen mit Fahrgestell drehbar angelenkt.

Zum Bewegen des bewegbaren Elementes 2 sind dabei zwei Arbeits-Hydraulikzylinder 1 vorgesehen, welche über entsprechende Anlenkpunkte am bewegbaren Element 2 sowie an der Schweißkonstruktion 4 des Oberwagens angelenkt sind. Weiterhin ist ein Ausführungsbeispiel eines erfindungsgemäßen Energierückgewinnungszylinders 3 vorgesehen, welcher wie die Arbeits-Hydraulikzylinder 1 zwischen dem bewegbaren Element 2 und dem Oberwagen des Arbeitsgerätes 4 angeordnet ist und der Energierückgewinnung aus der Bewegung des bewegbaren Elements dient. Der Energierückgewinnungszylinder 3 ist dabei zwischen den beiden Arbeits-Hydraulikzylindern 1 angeordnet.

An dem bewegbaren Element 2, in diesem Fall dem Baggerausleger, ist dabei üblicherweise eine Arbeitsausrüstung, zum Beispiel eine Baggerschaufel angeordnet. Beim Absenken des bewegbaren Elementes 2 soll nun die potentielle Energie des bewegbaren Elementes sowie der Arbeitsausrüstung rückgewonnen und gespeichert werden, um bei der Aufwärtsbewegung des bewegbaren Elements die statischen Kräfte, welche durch das Gewicht des bewegbaren Elements und der Arbeitsausrüstung sonst auf den Arbeits-Hydraulikzylindern lasten würden, zumindest teilweise zu kompensieren und so weniger Energie mittels der Arbeits-Hydraulikzylinder 1 zuführen zu müssen. Hierfür weist der erfindungsgemäße Hydraulikzylinder vorteilhafterweise eine mit Gas gefüllte Kammer auf. Bei einem Absenken des bewegbaren Elementes wird das Gas in der mit Gas gefüllten Kammer des Energierückgewinnungszylinders komprimiert, während es sich beim Anheben des bewegbaren Elementes ausdehnt und dabei die Arbeits-Hydraulikzylinder 1 unterstützt. Hierfür ist der erfindungsgemäße Energierückgewinnungszylinder vorteilhafterweise bodenseitig mit Gas befüllt und weist weiterhin vorteilhafterweise eine hohle, zur Bodenseite hin offene Kolbenstange auf.

In Fig. 2 a und 2 b sind nun Prinzipzeichnungen zweier Varianten eines Energierückgewinnungszylinders 3 gezeigt. Beide Ausführungsbeispiele weisen dabei einen Zylinder 10 auf, in welchem eine Kolbenstange 11 axial verschieblich gelagert ist. Die Kolbenstange 11 hat dabei die Form eines Hohlzylinders, so daß sich im Inneren der Kolbenstange 11 ein Hohlraum 13 ergibt, welcher zur Bodenseite 12 des Zylinders hin offen ist. Die Bodenseite 12 des Energierückgewinnungszylinders 3 und der Hohlraum 13 im Inneren der Kolbenstange 11 bilden dabei eine zusammenhängende Kammer, welche mit unter Druck stehendem Gas befüllt ist. Bei einer Bewegung der Kolbenstange 11 im Zylinder 10 verändert sich dabei die Größe der Bodenseite 12, so daß das mit Gas befüllte Volumen bei voll eingeschobener Kolbenstange 11 im Wesentlichen dem Hohlraum 13 im Inneren der hohlen Kolbenstange entspricht, bei voll ausgeschobener Kolbenstange dagegen dem Volumen dieses Hohlraums 13 plus dem Volumen des Zylinders 10.

Der Energierückgewinnungszylinder weist dabei ein bodenseitiges Lagerstelle 15 und ein kolbenstangenseitiges Lagerstelle 16 auf, mit welchen er am Arbeitsgerät und beweglichen Element angelenkt ist. Der Energierückgewinnungszylinder ist dabei zwischen bewegbarem Element und Arbeitsgerät so angelenkt, daß die Kolbenstange 11 durch das Gewicht des bewegbaren Elementes und der Arbeitsausrüstung nach unten gegen den Boden des Energierückgewinnungszylinders bewegt wird, so daß das Gasvolumen komprimiert wird. Durch die erfindungsgemäße Ausführung des Energierückgewinnungszylinders mit einer hohlen Kolbenstange 11 ist dabei auch bei eingefahrenem Zylinder ausreichend Gasvolumen vorhanden, um einen flachen Druckanstieg beim Senken der Arbeitsausrüstung zu ermöglichen. Umgekehrt ruht bei einer Aufwärtsbewegung des bewegbaren Elementes ein Teil des Gewichts auf dem Gasvolumen im Energierückgewinnungszylinder, so daß die Arbeits-Hydraulikzylinder nicht mehr die komplette statische Last aufbringen müssen.

Der Energierückgewinnungszylinder weist ein Befüllventil 17 zum Befüllen der Kammer mit Gas und ein Druckbegrenzungsventil 18 zur Begrenzung des Gasdrucks auf. Im ersten Ausführungsbeispiel in Fig. 2 a sind dabei das Befüllventil 17 und das Druckbegrenzungsventil 18 bodenseitig angeordnet. In dem in Figur 2 b gezeigten zweiten Ausführungsbeispiel sind das Befüllventil 17 und das Druckbegrenzungsventil 18 dagegen kolbenstangenseitig angeordnet.

Bei den in Fig. 2a und 2b gezeigten Energierückgewinnungszylindern handelt es sich um einen zweiseitige Hydraulikzylinder, so daß ein Ringraum 14 vorgesehen ist, welcher über einen Anschluß 12 an ein Hydrauliksystem des Arbeitsgerätes anschließbar ist. Auch die Bodenseite kann einen Anschluß aufweisen, über welche sie an ein Hydrauliksystem des Arbeitsgerätes anschließbar ist.

Wie in Fig. 2b gezeigt, kann das Gasvolumen im Energierückgewinnungszylinder dabei durch Zuführen oder Abführen von Öl zum Energierückgewinnungszylinder verändert werden. Hierfür ist im zweiten Ausführungsbeispiel in Fig. 2b ein Anschluß 20 zu Versorgung mit Öl vorgesehen, über welchen der Bodenraum des Energierückgewinnungszylinders an ein Hydrauliksystem des Arbeitsgerätes anschließbar ist.

Die Erfinder der vorliegenden Erfindung haben festgestellt, daß beim Betrieb eines Energierückgewinnungszylinders durch die Kompression des Gases Wärme erzeugt wird, durch welche sich der Energierückgewinnungszylinder unkontrolliert aufheizen kann. Zudem ändert sich die Kennlinie des Energierückgewinnungszylinders in Abhängigkeit von der Temperatur des Gases in der mit Gas gefüllten Kammer.

In einem ersten Aspekt stellt die vorliegende Erfindung daher einen Energierückgewinnungszylinder mit einem Wärmetauscher zur Verfügung, welcher zumindest eine Kühlung des Energierückgewinnungszylinders ermöglicht. Die Kühlung kann dabei aktiv oder passiv erfolgen. Zusätzlich kann der Wärmetauscher jedoch auch der Erwärmung des Energierückgewinnungszylinders dienen.

Ein erstes Ausführungsbeispiel eines solchen Energierückgewinnungszylinders ist dabei in Fig. 3 gezeigt. Der Energierückgewinnungszylinder weist einen Wärmetauscher 30 mit einem Strömungsraum auf, welcher an einen Kühlkreislauf anschließbar ist und von einem Kühlfluid durchströmt werden kann. Hierfür weist der Wärmetauscher 30 Anschlüsse 31 und 32 auf, über welche er an den Kühlkreislauf anschließbar ist, insbesondere über Schlauchleitungen.

Der Wärmetauscher 30 ist dabei auf dem Zylindermantel 10 des Energierückgewinnungszylinders angeordnet und erstreckt sich im Ausführungsbeispiel im wesentlichen über die gesamte Länge des Zylindermantels, um so einen möglichst guten Wärmeübergang zwischen dem Gas im Inneren des Energierückgewinnungszylinders und dem Kühlfluid zu ermöglichen.

In Figuren 4a bis 4d sind nun vier Varianten eines solchen Wärmetauschers gezeigt, wobei der Wärmetauscher direkt auf dem Zylindermantel 10 angeordnet ist. In Figuren 4a bis 4c bildet dabei der Zylindermantel 10 des Energierückgewinnungszylinders eine Begrenzungswand des Strömungsraumes des Wärmetauschers. Dabei ist ein Außenrohr 35 vorgesehen, welches über den Zylindermantel 10 geschoben ist und eine Außenwand des Strömungsraumes des Energierückgewinnungszylinders bildet.

Bei dem in Fig. 4a gezeigten Ausführungsbeispiel ist dabei als Außenrohr eine einfache zylindrische Hülle 35 vorgesehen, welche direkt auf dem Zylindermantel 10 angeordnet ist, so daß der Strömungsraum einen hohlzylindrischen Raum zwischen dem Zylindermantel 10 und dem Außenrohr 35 einnimmt.

Bei den in Figuren 4b und 4c gezeigten Ausführungsbeispielen verläuft der Strömungsraum 41 dagegen spiralförmig um den Energierückgewinnungszylinder. Hierdurch wird eine gleichmäßigere Wärmeverteilung im Strömungsraum erreicht. Hierfür kann ein spiralförmiger Wendel in dem Strömungsraum vorgesehen sein, welcher diesen in einen spiralförmigen Verlauf unterteilt.

In Fig. 4b wird der spiralförmige Strömungsraum 41 dabei dadurch erzeugt, daß der Zylindermantel 10 einen spiralförmigen Wendel 36 aufweist, welcher den spiralförmigen Strömungsraum 41 erzeugt. Bei dem in Fig. 4c gezeigten Ausführungsbeispiel erfolgt die Umsetzung dagegen auf dem Außenrohr 35, welches den spiralförmigen Wendel 37 aufweist.

Der Strömungsraum 41 wird damit durch den spiralförmigen Wendel bzw. die entsprechenden spiralförmigen Aussparungen im Zylindermantel 10 bzw. im Außenrohr 35 zur Verfügung gestellt, welche zwischen den Wendeln 36 bzw. 37 angeordnet sind. Diese Aussparungen können dabei ins Material des Zylindermantels 10 bzw. des Außenrohres 35 eingearbeitet sein. Alternativ könnte auch ein spiralförmiger Wendel als separates Element zwischen Zylindermantel 10 und Außenrohr 35 angeordnet werden.

In Fig. 4d weist der Wärmetauscher dagegen ein Rohrelement 38 auf, welches spiralförmig um den Energierückgewinnungszylinder gewickelt ist und so den Strömungsraum zur Verfügung stellt.

Bei den in Fig. 4a bis 4d gezeigten Ausführungsbeispielen ist das Außenrohr 35 bzw. das Rohrelement 38 direkt auf dem Zylindermantel 10 angeordnet. Bei den in Figuren 5a bis d gezeigten Ausführungsbeispielen ist dagegen ein Zylinderrohr 45 vorgesehen, welches wärmeleitend direkt auf dem Zylindermantel 10 angeordnet ist. Dieses Zylinderrohr 45 erfüllt dabei in den Figuren 5a bis 5d die gleiche Funktion, welche dem Zylindermantel 10 in den Ausführungsbeispielen der Figuren 4a bis 4d zukamen. Durch das Zylinderrohr bildet der Wärmetauscher eine separate Funktionseinheit, welche als ganzes auf den Energierückgewinnungszylinder aufgeschoben werden kann. Ansonsten entspricht die Ausführung der Wärmetauscher in Figuren 5a bis 5d der Ausführung in Figuren 4a bis 4d.

In Figuren 6a bis 6c sind drei Varianten eines Wärmetauschers gezeigt, welcher auf dem Prinzip der Luftkühlung basiert. Der Wärmetauscher weist hierfür Kühlrippen 50, 51 bzw. 52 auf, welche von der Außenluft umströmt werden und so Wärme von dem Energierückgewinnungszylinder abziehen. Die Kühlrippen sind dabei auf dem Zylindermantel 10 angeordnet. Auch hier könnte jedoch wie vorher schon beschrieben ein zusätzliches Zylinderrohr auf dem Zylindermantel 10 angeordnet werden, auf welchem die Kühlrippen angeordnet sind.

Die Kühlrippen können dabei je nach Ausführung unterschiedlich geformt sein. Ziel ist es dabei, eine große Oberfläche und eine gute Umströmung der Kühlrippen zu gewährleisten.

Bei dem in Fig. 6a gezeigten Ausführungsbeispiel sind dabei radiale Kühlrippen 50 vorgesehen, welche wie aus der Schnittansicht entlang der Längsachse des Energierückgewinnungszylinders ersichtlich in Ebenen senkrecht zu der Längsachse des Energierückgewinnungszylinders und um den Energierückgewinnungszylinder verlaufen.

Bei dem in Fig. 6b gezeigten Ausführungsbeispiel sind dagegen Kühlrippen 51 vorgesehen, welche in Längsrichtung des Energierückgewinnungszylinders verlaufen. Dies wird besonders deutlich aus der rechts gezeigten Schnittansicht senkrecht zur Längsachse des Energierückgewinnungszylinders.

Bei dem in Fig. 6c gezeigten Ausführungsbeispiel sind dagegen spiralförmige Kühlrippen gezeigt, welche spiralförmig um den Energierückgewinnungszylinder herum verlaufen.

In einem weiteren Aspekt der vorliegenden Erfindung ist eine Vorrichtung zur Einstellung der Temperatur eines Energierückgewinnungszylinders vorgesehen. Die Vorrichtung zur Einstellung der Temperatur des Energierückgewinnungszylinders dient dabei der Kühlung des Energierückgewinnungszylinders. Zusätzlich kann die Vorrichtung auch der Erwärmung des Energierückgewinnungszylinders dienen.

Vorteilhafterweise dient die Vorrichtung dabei der Einstellung der Betriebstemperatur ges Energierückgewinnungszylinders bzw. des in diesem angeordneten Gases. Vorteilhafterweise erfolgt die Einstellung der Temperatur dabei auf Grundlage mindestens eines Betriebsparameters des Arbeitsgerätes, welcher als Eingangsgröße in eine Steuerung zur Ansteuerung der Vorrichtung der Einstellung der Temperatur des Energierückgewinnungszylinders eingeht.

Weiterhin vorteilhafterweise ist dabei ein Temperatursensor vorgesehen, wobei die Ansteuerung der Vorrichtung zur Einstellung der Temperatur des Energierückgewinnungszylinders auf Grundlage eines Signals des Temperatursensors erfolgt.

Vorteilhafterweise umfaßt die Vorrichtung zur Einstellung der Temperatur des Energierückgewinnungszylinders dabei einen Wärmetauscher mit einem Strömungsraum, wie dies oben beschreiben wurde. Dabei ermöglicht ein solcher Wärmetauscher den Anschluß des Energierückgewinnungszylinders an einen Kühlkreislauf.

In Fig. 7 ist nun ein solches Ausführungsbeispiel einer Vorrichtung zur Einstellung der Temperatur des Energierückgewinnungszylinders 3 gezeigt. Der Energierückgewinnungszylinder 3 weist dabei einen Wärmetauscher 30 mit einem Strömungsraum auf, welcher über die Ein- und Ausgänge 31 bzw. 32 an einen Kühlkreislauf 65 angeschlossen ist. Durch den Kühlkreislauf 65 wird dabei mittels einer Pumpe 66 Kühlfluid gepumpt. In dem Kühlkreislauf 65 ist eine Kühleinheit 60 angeordnet, über welche das Kühlfluid gekühlt werden kann. Die Kühleinheit 60 umfaßt dabei einen weiteren Wärmetauscher 61 sowie einen Lüfter 62, über welchen der Wärmetauscher 61 gekühlt wird.

In diesem Ausführungsbeispiel fließt das Kühlfluid daher mit Hilfe einer Umwälzpumpe 66 durch den externen Wärmetauscher 61. In diesem Wärmetauscher 61 wird über den in Reihe geschalteten Lüfter 62 das Fluid heruntergekühlt und wieder in den Kühlkreislauf gepumpt. Hierdurch kann überschüssige Wärme, welche beim Betrieb des Energierückgewinnungszylinders 3 entsteht, abgeführt werden. Vorteilhafterweise erfolgt die Ansteuerung des Kühlkreislaufes bzw. seiner Komponenten dabei durch eine Steuerung. Vorteilhafterweise erfolgt die Ansteuerung dabei aufgrund eines Betriebsparameters, insbesondere aufgrund des Signals eines Temperatursensors.

Bei dem in Fig. 7 gezeigten Ausführungsbeispiel ist dabei keine aktive Erwärmung des Energierückgewinnungszylinders möglich. Der Energierückgewinnungszylinder erwärmt sich jedoch ohnehin während des Betriebs durch die Kompression des Gases.

In Figuren 8a bis 8c sind dagegen drei Varianten einer Vorrichtung zur Einstellung der Temperatur des Energierückgewinnungszylinders gezeigt, welche ein aktive Erwärmung des Energierückgewinnungszylinders ermöglichen. Diese Vorrichtungen zum Erwärmen des Energierückgewinnungszylinders sind in Kombination mit einer Vorrichtung zur Kühlung des Energierückgewinnungszylinders gezeigt. Eine Vorrichtung zum Erwärmen des Energierückgewinnungszylinders kann dabei insbesondere in kühlen Regionen eingesetzt werden, oder wenn das Gerät elektrisch betrieben wird.

In Fig. 8a erfolgt die Erwärmung des Energierückgewinnungszylinders dabei dadurch, daß in den in Figur 7 gezeigten Kühlkreislauf ein Heizelement 70 zum Erwärmen des Kühlfluides integriert ist. Der Kühlkreislauf dient damit als Heizkreislauf für den Energierückgewinnungszylinder. Damit funktioniert die Erwärmung des Energierückgewinnungszylinders nach dem Prinzip einer Standheizung. Dabei wird das Kühlfluid im Kühlkreislauf durch eine elektrische Heizspirale in dem Heizelement 70 aufgewärmt und über die Umwälzpumpe 66 durch den Wärmetauscher 30 gepumpt.

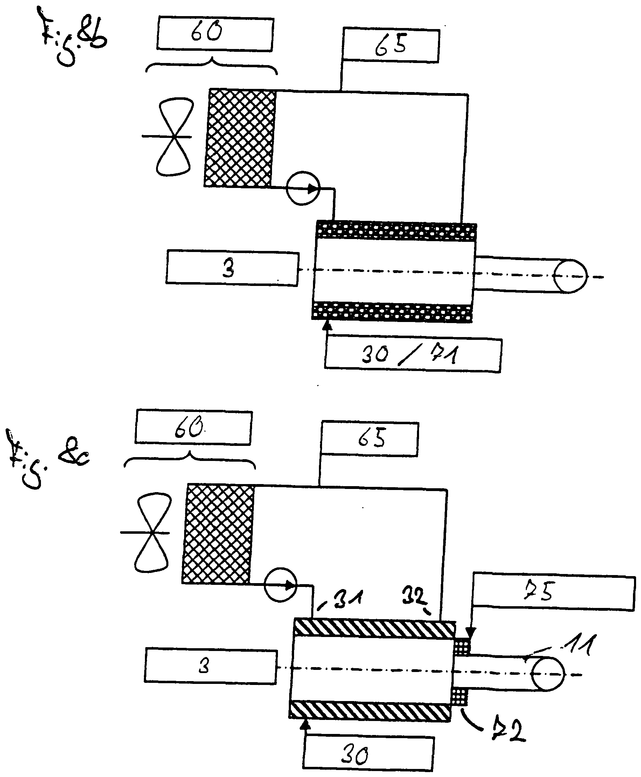

Bei dem in Fig. 8b gezeigten Ausführungsbeispiel ist dagegen ein direkt am Energierückgewinnungszylinder 3 angeordnetes Heizelement vorgesehen. Insbesondere kann dabei eine elektrische Heizdecke vorgesehen sein, welche um den Energierückgewinnungszylinder herum angeordnet ist.

Bei dem in Fig. 8c gezeigten Ausführungsbeispiel erfolgt die Erwärmung des Energierückgewinnungszylinders dagegen über Reibungselemente 72, welche über einen Aktor 75 gesteuert an die Zylinderstange 11 angelegt werden können und so gezielt Reibung zum Erwärmen des Energierückgewinnungszylinders erzeugen. Auch die in Figuren 8b und 8c gezeigten Heizvorrichtungen werden in Kombination mit einer Kühlanordnung eingesetzt.

Der Energierückgewinnungszylinder muß dabei nicht über einen separaten Kühlkreislauf versorgt werden. Vielmehr wird in einer besonders bevorzugten Ausführungsform der Energierückgewinnungszylinder an den Kühlkreislauf einer weiteren Komponente des Arbeitsgerätes angeschlossen, insbesondere an den Kühlkreislauf des Verbrennungsmotors oder der Hydraulik des Arbeitsgerätes.

Dabei kann der Wärmetauscher ständig mit dem Kühlfluid aus dem Kühlkreislauf des Arbeitsgerätes durchströmt werden, oder gesteuert durch eine Schaltanordnung an diesen angeschlossen werden. Das Kühlfluid aus dem Kühlkreislauf des Arbeitsgerätes hat immer eine gleichbleibende Temperatur. Hierdurch werden zwei Probleme auf einmal gelöst: Der Kühlkreislauf kann zu Beginn eines Arbeitsspieles den Energierückgewinnungszylinder auf eine konstante Betriebstemperatur bringen. Hierdurch wird gewährleistet, daß immer derselbe Betriebsdruck im Zylinder herrscht. Hierdurch wird immer eine gleichbleibende Kraft/Hub-Kurve im Gaszylinder gewährleistet, unabhängig von der Außentemperatur. Der zweite Punkt ist die Kühlung des Energierückgewinnungszylinders. Hierdurch kann verhindert werden, daß die Temperatur des Energierückgewinnungszylinders übermäßig ansteigt und die Berstsicherungen aktiviert werden.

Die Temperatur des Energierückgewinnungszylinders wird bevorzugt über eine Steuerung angesteuert und weiterhin in vorteilhafter Weise über das Signal eines Temperatursensors geregelt. In Fig. 9 ist nun ein Ausführungsbeispiel eines solchen Systems dargestellt. Dabei ist ein Temperatursensor 95 an dem Energierückgewinnungszylinder vorgesehen, welcher die Temperatur des Gases in der mit Gas gefüllten Kammer mißt. Alternativ könnte der Temperatursensor auch die Temperatur des Energierückgewinnungszylinders, oder des Kühlfluids messen.

In Abhängigkeit von der Temperatur des Temperatursensors 95 wird nun durch eine Steuerung die Vorrichtung zur Einstellung der Temperatur des Energierückgewinnungszylinders angesteuert. Insbesondere werden dabei je nach Temperatur eine Vorrichtung zur Erwärmung und/oder eine Vorrichtung zur Kühlung des Energierückgewinnungszylinders ein- bzw. ausgeschaltet.

In einer vorteilhaften Variante wird die Vorrichtung zur Einstellung der Temperatur dabei so betrieben, daß der Gaszylinder in einem festgelegten Gas-Temperaturfenster zwischen einer minimalen und einer maximalen Betriebstemperatur betrieben wird. Das heißt bei Temperaturen unterhalb der minimalen Betriebstemperatur wird mit Hilfe des Motorkreislaufs 80 oder einer externen Quelle das Gas auf die minimale Betriebstemperatur gebracht. Ist die minimale Betriebstemperatur erreicht, wird der Heizkreislauf weggeschaltet und der Gaszylinder arbeitet nun autark. Wird die maximale Betriebstemperatur überschritten, wird der Kühlkreislauf aktiviert. Dabei kann zum Beispiel Kühlflüssigkeit nur im Kreislauf ohne einen Kühler durch den Wärmetauscher gepumpt werden. Alternativ kann ein zusätzlicher Gebläsekühler vorgesehen sein, durch welchen die Kühlflüssigkeit abgekühlt wird.

Vorteilhafterweise wird dabei das Betriebstemperaturfenster so gewählt, daß der Heiz- bzw. Kühlregelkreis nur in geringem Maße benötigt wird. Primäres Ziel ist hier, den Energieaufwand zur Temperatureinstellung so gering wie möglich zu halten. Als Temperaturfenster kann hier zum Beispiel ein Arbeitsbereich zwischen 25°C und 40°C gewählt werden.

In dem in Fig. 9 gezeigten Ausführungsbeispiel ist zur Ansteuerung ein Umschaltventil 85 im Kühlkreislauf vorgesehen, durch welches der Wärmetauscher 30 abwechselnd mit einer Vorrichtung zur Erwärmung 80 und einer Vorrichtung zur Kühlung 60 verbunden werden kann. Im Ausführungsbeispiel handelt es sich dabei bei der Vorrichtung 80 um den Kühlkreislauf eines weiteren Elementes des Arbeitsgerätes welcher hier die Funktion der Erwärmung des Energierückgewinnungszylinders übernimmt. Alternativ könnte eine separate Wärmequelle zum Einsatz kommen. Zur Kühlung ist ein separater Kühlkreislauf mit einem Kühlelement 60 und einer Umwälzpumpe 66 vorgesehen, wobei der Kühlkreislauf vorteilhafterweise eine Leistung von mehr als einem Kilowatt, vorteilhafterweise von mehr als drei Kilowatt und in weiterhin vorteilhafter Weise von ca. 5 Kilowatt aufweist.

Die oben erläuterte Ansteuerung erfolgt nun dadurch, daß unterhalb der minimalen Betriebstemperatur der Wärmetauscher mit der Wärmequelle 80 verbunden wird, und oberhalb der maximalen Betriebstemperatur mit dem Kühlkreislauf. Zwischen der minimalen und der maximalen Betriebstemperatur kann dabei der Kühlkreislauf an die Kühlanordnung 60 angeschlossen sein, ohne daß diese betrieben wird.

Alternativ kann als Variante die Fig. 9 mit Bezugszeichen 90 bezeichnete Schaltanordnung gewählt werden, durch welche der Wärmetauscher des Energierückgewinnungszylinders sowohl von der Heizanordnung 80, also auch von der Kühlanordnung 60 getrennt werden kann.

Eine entsprechende Ansteuerung kann selbstverständlich auch bei den in Fig. 8 gezeigten Ausführungsbeispielen durch ein entsprechendes Ein- bzw. Ausschalten der Wärme- bzw. Kühleinheit erfolgen.

Die vorliegende Erfindung ermöglicht in unterschiedlichen Aspekten, den Energierückgewinnungszylinder mit einer möglichst konstanten Betriebstemperatur betreiben zu können. Zum einen kann damit erfindungsgemäß verhindert werden, daß sich der Gaszylinder undefiniert aufheizt. Weiterhin kann das Gas wenn notwendig erwärmt werden, so daß das Arbeitsgerät mit einer möglichst gleichbleibenden Kraft/Weg-Kennlinie des Energierückgewinnungszylinders betrieben werden kann.

## Patentansprüche

1. Arbeitsgerät, bei dem es sich um einen Bagger oder eine Maschine zum Materialumschlag handelt, mit einem über mindestens einen Arbeits-Antrieb bewegbaren Element (2), wobei mindestens ein Energierückgewinnungszylinder (3) zur Energierückgewinnung aus der Bewegung des bewegbaren Elements (2) vorgesehen ist, welcher eine mit Gas befüllte Kammer aufweist,
**gekennzeichnet durch**
eine Vorrichtung zur Einstellung der Temperatur des Energierückgewinnungszylinders (3), wobei die Vorrichtung die Kühlung des Energierückgewinnungszylinders (3) ermöglicht.

2. Arbeitsgerät nach Anspruch 1, wobei die Vorrichtung die Erwärmung des Energierückgewinnungszylinders (3) ermöglicht, wobei die Erwärmung vorteilhafterweise über ein Heizelement und/oder ein Reibungselement (72) und/oder einen Wärmetauscher (30) erfolgt, welcher weiterhin vorteilhafterweise ah dem Energierückgewinnungszylinder (3) angeordnet ist.

3. Arbeitsgerät nach Anspruch 1, wobei die Kühlung über einen Wärmetauscher (30) erfolgt, welcher vorteilhafterweise an dem Energierückgewinnungszylinder (3) angeordnet ist.

4. Arbeitsgerät nach einem der vorangegangenen Ansprüche, wobei die Vorrichtung eine Steuerung zur Einstellung der Temperatur des Energierückgewinnungszylinders (3) auf Grundlage mindestens eines Betriebsparameters des Arbeitsgerätes umfasst.

5. Arbeitsgerät nach einem der vorangegangenen Ansprüche, wobei ein Temperatursensor vorgesehen ist, wobei die Ansteuerung der Vorrichtung zur Einstellung der Temperatur des Energierückgewinnungszylinders (3) auf Grundlage eines Signals des Temperatursensors erfolgt, wobei der Temperatursensor vorteilhafterweise die Außentemperatur und/oder die Temperatur des Energierückgewinnungszylinder (3) und/oder die Temperatur des Gases in der mit Gas befüllten Kammer und/oder die Temperatur eines Kühlfluids bestimmt.

6. Arbeitsgerät nach einem der vorangegangenen Ansprüche, wobei die Vorrichtung eine Steuerung zur Einstellung der Temperatur des Energierückgewinnungszylinders (3) umfasst, die den Energierückgewinnungszylinder (3) unterhalb einer ersten Schwellentemperatur erwärmt und/oder oberhalb einer zweiten Schwellentemperatur kühlt und/oder die innerhalb eines Temperaturfensters keine Kühlung und/oder Erwärmung erfolgen lässt.

7. Arbeitsgerät nach einem der vorangegangenen Ansprüche, wobei der Energierückgewinnungszylinder (3) einen Wärmetauscher (30) umfaßt, welcher an einen Kühlkreislauf (65) angeschlossen ist und von einem Kühlfluid durchströmt wird, wobei vorteilhafterweise der Kühlkreislauf (65) eine Kühleinheit (60) zum Kühlen des Kühlfluids und/oder eine Heizeinheit zum Erwärmen des Kühlfluids aufweist.

8. Arbeitsgerät nach Anspruch 7, wobei der Kühlkreislauf (65) an den Kühlkreislauf einer Komponente des Arbeitsgerätes angeschlossen ist, insbesondere an einen an den Kühlkreislauf eines Verbrennungsmotors und/oder einer Hydraulik des Arbeitsgerätes.

9. Verfahren zum Betrieb eines Arbeitsgerätes nach einem der vorangegangenen Ansprüche, wobei die Temperatur des Energierückgewinnungszylinders (3) vermindert wird, insbesondere in Abhängigkeit von mindestens einem Betriebsparameter.

## Claims

1. An implement, which is an excavator or a material handling machine, comprising an element (2) movable via at least one working drive, wherein at least one energy recovery cylinder (3) is provided for energy recovery from the movement of the movable element (2), which includes a chamber filled with gas,
**characterized by**
a device for adjusting the temperature of the energy recovery cylinder (3), wherein the device provides for cooling the energy recovery cylinder (3).

2. The implement according to claim 1, wherein the device provides for heating the energy recovery cylinder (3), wherein heating advantageously is effected via a heating element and/or a friction element (72) and/or a heat exchanger (30) which furthermore advantageously is arranged on the energy recovery cylinder (3).

3. The implement according to claim 1, wherein cooling is effected via a heat exchanger (30) which advantageously is arranged on the energy recovery cylinder (3).

4. The implement according to any of the preceding claims, wherein the device comprises a control unit for adjusting the temperature of the energy recovery cylinder (3) on the basis of at least one operating parameter of the implement.

5. The implement according to any of the preceding claims, wherein a temperature sensor is provided, wherein the actuation of the device for adjusting the temperature of the energy recovery cylinder (3) is effected on the basis of a signal of the temperature sensor, wherein the temperature sensor advantageously determines the outside temperature and/or the temperature of the energy recovery cylinder (3) and/or the temperature of the gas in the chamber filled with gas and/or the temperature of a cooling fluid.

6. The implement according to any of the preceding claims, wherein the device comprises a control unit for adjusting the temperature of the energy recovery cylinder (3), which heats the energy recovery cylinder (3) below a first threshold temperature and/or cools the same above a second threshold temperature and/or which allows no cooling and/or heating to be effected within a temperature window.

7. The implement according to any of the preceding claims, wherein the energy recovery cylinder (3) comprises a heat exchanger (30) which is connected to a cooling circuit (65) and through which a cooling fluid flows, wherein advantageously the cooling circuit (65) includes a cooling unit (60) for cooling the cooling fluid and/or a heating unit for heating the cooling fluid.

8. The implement according to claim 7, wherein the cooling circuit (65) is connected to the cooling circuit of a component of the implement, in particular to the cooling circuit of an internal combustion engine and/or a hydraulic system of the implement.

9. A method for operating an implement according to any of the preceding claims, wherein the temperature of the energy recovery cylinder (3) is reduced, in particular in dependence on at least one operating parameter.

## Revendications

1. Appareil de travail, dont il s'agit d'un excavateur ou d'une machine de manutention de matériaux, comportant un élément (2) déplaçable par au moins un entraînement de travail, dans lequel au moins un cylindre de récupération d'énergie (3) est prévu pour la récupération d'énergie du mouvement de l'élément déplaçable (2), qui possède une chambre remplie de gaz,
**caractérisé par**
un dispositif pour le réglage de la température du cylindre de récupération d'énergie (3), le dispositif permettant le refroidissement du cylindre de récupération d'énergie (3).

2. Appareil de travail selon la revendication 1, dans lequel le dispositif permet le chauffage du cylindre de récupération d'énergie (3), le chauffage étant avantageusement effectué par un élément de chauffage ou/un élément de friction (72) ou/un un échangeur de chaleur (30), qui en outre est avantageusement agencé sur le cylindre de récupération d'énergie (3).

3. Appareil de travail selon la revendication 1, dans lequel le refroidissement est effectué par un échangeur de chaleur (30), qui est avantageusement agencé sur le cylindre de récupération d'énergie (3).

4. Appareil de travail selon l'une quelconque des revendications précédentes, dans lequel le dispositif comporte une unité de commande pour le réglage de la température du cylindre de récupération d'énergie (3) sur la base d'au moins un paramètre de fonctionnement de l'appareil de travail.

5. Appareil de travail selon l'une quelconque des revendications précédentes, dans lequel un capteur de température est prévue, l'actionnement du dispositif pour le réglage de la température du cylindre de récupération d'énergie (3) étant effectué sur la base d'un signal du capteur de température, le capteur de température déterminant avantageusement la température extérieur et/ou la température du cylindre de récupération d'énergie (3) et/ou la température du gaz dans la chambre remplie de gaz et/ou la température d'un fluide de refroidissement.

6. Appareil de travail selon l'une quelconque des revendications précédentes, dans lequel le dispositif comporte une unité de commande pour le réglage de la température du cylindre de récupération d'énergie (3), qui chauffe le cylindre de récupération d'énergie en dessous d'une première température seuil et/ou le refroidit au dessus d'une deuxième température seuil et/ou ne permet pas de refroidissement et/ou de chauffage à l'intérieur d'une fenêtre de température.

7. Appareil de travail selon l'une quelconque des revendications précédentes, dans lequel le cylindre de récupération d'énergie (3) comporte un échangeur de chaleur (30), qui est relié à un circuit de refroidissement (65) et est traversé par un fluide de refroidissement, le circuit de refroidissement (65) étant avantageusement une unité de refroidissement (60) pour refroidir le fluide de refroidissement et/ou une unité de chauffage pour chauffer le fluide de refroidissement.

8. Appareil de travail selon la revendication 7, dans lequel le circuit de refroidissement (65) est relié au circuit de refroidissement d'un composant de l'appareil de travail, en particulier au circuit de refroidissement d'un moteur à combustion interne et/ou d'un système hydraulique de l'appareil de travail.

9. Procédé pour faire fonctionner un appareil de travail selon l'une quelconque des revendications précédentes, dans lequel la température du cylindre de récupération d'énergie (3) est réduite, en particulier en fonction d'au moins un paramètre de fonctionnement.
